# EUROPEAN PATENT APPLICATION

(11) **EP 4 650 713 A1**
(43) Date of publication of application: **19.11.2025**
(21) Application number: 24175830.9
(22) Date of filing: 14.05.2024
(51) Int. Cl.: G01C 19/5614, G01C 19/5621, G01C 19/5776

(54) **CAPACITIVE GYROSCOPE PICKOFF**

(71) Applicant: ATLANTIC INERTIAL SYSTEMS LIMITED, Plymouth, Devon PL6 6DE (GB)
(72) Inventor: HENDERSON, Geoffrey, Yelverton (GB)
(74) Representative: Dehns

(57) **Abstract**

A vibrating structure angular rate sensor comprising a MEMS structure comprising a vibrating structure (101), a primary drive transducer arranged to cause the structure (101) to oscillate in a primary mode at a resonant frequency, a first pick-off transducer arranged to sense oscillation of the structure (101), the first pick-off transducer comprising a first electrode (115a) and a second electrode (115b), and first pick-off circuitry. The first pick-off circuitry is arranged to apply a voltage having a frequency above the resonant frequency of the structure (101) to the first electrode (115a) and the second electrode (115b). The first pick-off circuitry is further arranged to detect changes in the voltage on the first electrode (115a) and the second electrode (115b) resulting from motion of the structure (101) with respect to the first electrode (115a) and the second electrode (115b).

## Description

### TECHNICAL FIELD

This disclosure relates generally to vibrating structure angular rate sensors, and more particularly to a vibrating structure angular rate sensor with improved resistance to charge trapping.

### BACKGROUND OF THE INVENTION

In many applications, vibrating structure angular rate sensors (also known as gyroscopes) are constructed using Micro-Electro-Mechanical Systems (MEMS) techniques, in which a sensing device is fabricated from a silicon wafer.

Certain MEMS angular rate sensors use structures comprising a planar ring supported by compliant supporting structures attached to a mount consisting of a rigid silicon frame or central hub. The frame or hub is in turn rigidly fixed to a glass substrate. Due to the compliant nature of the supporting structures, the planar ring may move elastically relative to the silicon mount, for example when deformed by an applied force.

The planar ring structure can be made to vibrate in a resonant mode using one or more drive transducers located around the ring perimeter. For example, pairs of drive transducers can excite the planar ring into a primary mode of resonance, in which a constant amplitude of motion is maintained at all times. When a rotation is applied around an axis perpendicular to the plane of the vibrating ring, Coriolis forces couple energy into a secondary mode of vibration, with the amplitude of the vibration being proportional to the applied angular rate. Coriolis-induced vibration can be measured using one or more pick-off transducers located around the ring perimeter, and the measured vibration in the secondary mode can be used to calculate the rate of angular motion experienced by the angular rate sensor.

The drive and pick-off transducers may comprise capacitive, piezoelectric or electromagnetic electrodes. In sensors employing capacitive electrodes, a known problem that may occur is charge trapping, which can occur in the presence of DC offset voltages. This effect involves the charging of thin dielectric layers on the electrode surfaces due to the migration of charged species in the presence of electrical field gradients between the electrodes and the ring.

Charge trapping is known to cause slow shifts in both bias and scale factor under constant operating conditions. The accumulated charge may dissipate over time once the voltage has been removed, leading the bias and scale factor shifts to return towards the original starting levels if the device is switched off for a sufficient duration. However, the effect will recur when the device is subsequently powered on again. This represents a significant limitation on the performance capability of capacitive angular rate sensors.

### SUMMARY OF THE INVENTION

According to a first aspect of the disclosure, there is provided a vibrating structure angular rate sensor comprising:
a MEMS structure comprising a vibrating structure;
a primary drive transducer arranged to cause the structure to oscillate in a primary mode at a resonant frequency;
a first pick-off transducer arranged to sense oscillation of the structure, the first pick-off transducer comprising a first electrode and a second electrode; and
first pick-off circuitry;

wherein the first pick-off circuitry is arranged to apply a voltage having a frequency above the resonant frequency of the ring structure to the first electrode and the second electrode; and
wherein the first pick-off circuitry is further arranged to detect changes in the voltage on the first electrode and the second electrode resulting from motion of the ring structure with respect to the first electrode and the second electrode.

Thus it will be seen that in accordance with the present disclosure there is provided a vibrating structure angular rate sensor which detects changes in the voltage on first and second electrodes of a pick-off transducer resulting from motion of a vibrating structure while a voltage having a frequency above the resonant frequency of the structure is applied to the electrodes. By applying a high frequency voltage (relative to the resonant frequency of the ring structure) to the pick-off electrodes, the pick-off circuitry is able to detect motion of the vibrating structure without requiring that a constant high magnitude voltage be applied across the electrodes in order to generate a detectable current. As there is no constant high magnitude voltage across the electrodes, charge trapping effects in the pick-off electrodes may be reduced.

The vibrating structure of the angular rate sensor may have any form appropriate for use in a vibrating structure gyroscope (VSG) or a Coriolis vibratory gyroscope (CVG). For example, the vibrating structure may comprise a tuning fork or a planar vibrating structure such as a ring resonator.

In some examples, the MEMS structure may comprise a planar vibrating ring structure. In some such examples, the MEMS structure comprising the planar vibrating ring structure further comprises a mount and a plurality of supporting structures fixed to the mount and to the planar vibrating ring structure. The planar vibrating ring structure may thus be flexibly supported by the plurality of supporting structures to move elastically relative to the mount.

In some examples, one of the first electrode and the second electrode may be located on one side of the vibrating structure and the other of the first electrode and the second electrode may be located on the opposite side of the vibrating structure. In this way, each electrode may form a gap between the electrode and the vibrating structure. The gaps may be substantially the same when the vibrating structure is at rest. For example, in the case of a tuning fork gyroscope, the first and second electrodes may be located on either side of the tines of the fork. In the case of a vibrating ring structure gyroscope, one of the first electrode and the second electrode may be located radially inside of the ring structure and the other of the first electrode and the second electrode may be located radially outside the ring structure. When the planar vibrating ring structure is at rest, the electrode located radially inside of the ring structure and the electrode located radially outside of the ring structure may be positioned at equal distances from the inner and outer surfaces of the planar ring structure respectively. In this way, a capacitor gap may be formed between the planar vibrating ring structure and each of the first and second electrodes that is substantially identical while the planar vibrating ring structure is at rest (e.g. is not driven to oscillate).

In some examples, the first pick-off circuitry may comprise one or more input nodes for receiving the voltage applied to the first and second electrodes. In some examples, the pick-off circuitry may comprise a single input node connected to the first electrode and to the second electrode, such that a common applied voltage from the input node can be received at the first electrode and the second electrode. In some examples however, the pick-off circuitry may comprise a respective input node for each of the first electrode and the second electrode, such that each input node is arranged to receive an applied voltage from a different source. For example, a first input node, connected to the first electrode, may receive an applied voltage from the first output of a differential amplifier, and a second input node, connected to the second electrode, may receive an applied voltage from a second output of a differential amplifier. In such examples, the first electrode and the second electrode may be configured to receive applied voltages of opposite polarity. It will be appreciated that the connections between the input node(s) and each electrode may be via one or more intermediate components, e.g. one or more intermediate impedances.

In some examples, each of the one or more input nodes may be connected to a respective voltage control element, configured to apply a respective voltage at each of the input nodes. The voltage control element(s) may be part of the vibrating structure angular rate sensor, or may be external to the vibrating structure angular rate sensor.

In some examples, the first pick-off circuitry may comprise a first capacitor connected between the input node and the first electrode, and a second capacitor connected between the input node and the second electrode. The first pick-off circuitry may thus comprise a first voltage divider and a second voltage divider. The first voltage divider comprises the first capacitor and the capacitor that is formed by the first electrode and the vibrating structure. The second voltage divider comprises the second capacitor and the capacitor that is formed by the second electrode and the vibrating structure. The first capacitor and the second capacitor may have substantially the same capacitance. As the vibrating structure moves, the gaps between the vibrating structure and each of the first electrode and the second electrode change and therefore the corresponding capacitances change. As these capacitances change, the effects of the corresponding voltage dividers also change. With electrodes positioned on opposite sides of the vibrating structure, as one gap increases, the other gap decreases. Thus the two voltage dividers will be adjusted in opposite directions. The magnitude of these changes in response to motion of the vibrating structure may be substantially equivalent.

In some examples however, the capacitance of the first capacitor and the capacitance of the second capacitor may not be identical, e.g. there may be a mismatch in capacitance due to processing variations during fabrication of the first capacitor and the second capacitor. In some such examples, the first pick-off circuitry may comprise a balancing input node for a balancing voltage, such that a balancing voltage may be applied to a node on one of the voltage dividers, (e.g. to one of the first electrode and the second electrode) to compensate for mismatches in capacitance. Thus, in some examples, a balancing voltage may be applied to one of the first electrode and the second electrode.

In some examples, the first pick-off circuitry may comprise a summing junction arranged to output a signal based on the voltage on the first electrode and the voltage on the second electrode. For example, the pick-off circuitry may comprise a summing junction arranged to determine the difference between the magnitudes of the voltage on the first electrode and the voltage on the second electrode and to output a signal based on the difference.

In some examples, the first electrode and the second electrode may be located at respective sides of the vibrating structure. For example, in examples in which the vibrating structure comprises a planar vibrating ring structure, the first electrode may be located radially inside of the ring and the second electrode may be located radially outside of the ring. In some such examples, movement of the vibrating structure towards one of the electrodes will result in a change in the capacitance between the vibrating structure and that electrode. In particular, there will be an increase in the capacitance between the vibrating structure and one electrode and a decrease in the capacitance between the vibrating structure and the other electrode. When these capacitances form part of voltage dividers as discussed above, this may result in an increase in voltage at one electrode and a decrease in voltage at the other electrode. In such examples, the summing junction may be arranged to output a signal based on a difference between the voltage on the first electrode and the voltage on the second electrode. For example, the summing junction may be arranged to determine the difference between the magnitude of the voltage on the first electrode and the magnitude of the voltage on the second electrode to determine a difference voltage, and to output a signal based on the difference voltage.

In some examples therefore, the voltage applied to the first voltage divider may be substantially the same as the voltage applied to the second voltage divider, and the first pick-off circuitry may comprise a differential amplifier arranged to receive inputs based on the voltage on the first electrode and the voltage on the second electrode at respective input terminals, and to output a difference voltage. In some examples, the inputs based on the voltage on the first electrode and the voltage on the second electrode may be the voltage on the first electrode and the voltage on the second electrode respectively. In other examples the amplifier inputs may be derived from (or related to) the voltages on the first and second electrodes.

In some examples, movement of the vibrating structure towards one of the electrodes may result in an increase in the voltage at both of the first and second electrodes, e.g. if the applied voltages to the two voltage dividers have opposite polarity. In such examples, the summing junction may be arranged to receive inputs based on the voltage on the first electrode and the voltage on the second electrode and to provide an output based on a sum of its inputs. For example, the summing junction may be arranged to determine the difference between the magnitudes of the input signals simply by adding them (as one input will be negative).

Thus, in some examples, the voltage applied to the first electrode may be inverted with respect to the voltage applied to the second electrode, and the first pick-off circuitry may comprise a summing amplifier (e.g. a voltage adder) arranged to receive inputs based on the voltage on the first electrode and the voltage on the second electrode at respective input terminals, and to output a sum voltage.

In some examples, the pick-off circuitry may comprise means for performing synchronous demodulation of the signal output by the summing junction. In some examples this may comprise performing synchronous demodulation of a difference voltage with the voltage applied by the pick-off circuitry (e.g. if the voltage applied to the first electrode and the second electrode is substantially the same). In some examples however, it may comprise performing synchronous demodulation of a sum voltage with a voltage applied to one of the electrodes (e.g. if the voltages applied to the first electrode and the second electrode have opposite polarities).

In some examples, the means for performing synchronous demodulation may comprise a mixer and a low pass filter. In some examples however, the means for performing synchronous demodulation may comprise a superheterodyne receiver or a lock-in amplifier or a four-quadrant mixer and a low pass filter.

In some examples, the applied voltage may be an oscillating voltage. The oscillating voltage may be controlled such that it is centred around a voltage of zero, e.g. such that there is no DC voltage offset. In some examples, the applied voltage may have a periodic waveform, such as a sinusoidal waveform or a square waveform. In some examples, the frequency of the applied voltage may be an integer multiple of the resonant frequency of the vibrating structure.

In some examples, the vibrating structure may be connected to a DC bias voltage. The magnitude of the DC bias voltage applied to the vibrating structure may no more than 10 volts in some examples. In some examples, the magnitude of the DC bias voltage may be no more than 5 volts. The use of a low-magnitude DC bias voltage is enabled by the application of a time-varying voltage to the first and second electrodes of the pick-off transducer, as in contrast to conventional systems the gain of the pick-off transducer of the angular rate sensor of the present disclosure is substantially independent of the bias voltage applied to the vibrating structure. It should be noted that the pick off circuitry described here does not require any DC bias voltage applied to the vibrating structure. A DC bias voltage may still be applied for other reasons, e.g. as part of the drive circuitry (in order to induce vibratory motion in the vibrating structure).

In some examples, the first electrode and the second electrode may be electrically connected to the DC bias voltage applied to the vibrating structure via respective first and second resistors. The first and second resistors may provide a large resistance relative to other components of the first pick-off circuitry, e.g. the first and second resistors may have a resistance of 1 MΩ or greater. By connecting the first electrode and the second electrode to the DC bias voltage via respective first and second resistors, each of the first electrode, the second electrode and the vibrating structure may be held at the same mean voltage. This may help to ensure that there is no voltage offset between the vibrating structure and the electrodes. As the first and second resistors electrically connect the first and second electrodes to the vibrating structure, there is no DC voltage across the capacitors that are formed between the vibrating structure and each of the first and second electrodes. With no DC voltage across them, there is no long term electric field that causes charge trapping. Accordingly, the bias and scale factor issues that arise from charge trapping are reduced or eliminated. It should be noted that the large resistances of the first and second resistors mean that an AC voltage from the input nodes can still be applied across the capacitors formed between the vibrating structure and the first and second electrodes.

In some examples, the vibrating structure angular rate sensor may comprise a second pick-off transducer comprising a third electrode and a fourth electrode. In such embodiments, the vibrating structure angular rate sensor may comprise second transducer pick-off circuitry. The second transducer pick-off circuitry may be arranged to apply a voltage having a frequency above the resonant frequency of the vibrating structure to the third electrode and the fourth electrode. The second transducer pick-off circuitry may be arranged to detect changes in the voltage on the third electrode and the fourth electrode resulting from motion of the vibrating structure with respect to the third electrode and the fourth electrode.

In some examples in which the vibrating structure comprises a planar ring structure, one of the third electrode and the fourth electrode may be located radially inside of a planar ring structure and the other of the third electrode and the fourth electrode may be located radially outside of the planar ring structure. When the planar vibrating ring structure is at rest, the electrode located radially inside of the planar ring structure and electrode located radially outside of the planar ring structure may be positioned at equal distances from the inner and outer surfaces of the planar ring structure respectively. In this way, a capacitor gap may be formed between the planar ring structure and each of the third and fourth electrodes that is substantially the same while the planar vibrating ring structure is at rest (e.g. is not driven to oscillate).

It will be appreciated that the features of the examples set out above in relation to the first pick-off circuitry and the first pick-off transducer are equally applicable to the second pick-off transducer.

In some examples, one of the first pick-off transducer and the second pick-off transducer may be a primary pick-off transducer arranged to sense oscillation of the structure in the primary mode, and the other of the first pick-off transducer and the second pick-off transducer may be a secondary pick-off transducer arranged to sense oscillation of the vibrating structure in a secondary mode induced by Coriolis forces when an angular rate is applied around an axis substantially perpendicular to the vibrating structure. In some such examples, the vibrating structure angular rate sensor may comprise a secondary drive transducer arranged to null the induced oscillation in the secondary mode.

In some examples, the frequency of the voltage applied to the electrodes of the first pick-off transducer may be a first frequency, and the voltage applied to the electrodes of the second pick-off transducer may be a second frequency.

In some examples, the first frequency may be a first integer multiple of the resonant frequency of the vibrating structure and the second frequency may be a second, different, integer multiple of the resonant frequency of the vibrating structure. In some examples, the first and second integers are different even numbers. Even numbers are convenient because even harmonics of the vibrating structure resonant frequency are typically lower amplitude than odd harmonics. In some examples, the first integer is not a multiple of the second integer or vice versa. This ensures that harmonics of one applied voltage do not interfere with the other applied voltage. By setting the frequency of the voltage applied to the first and second pick-off transducers as different, integer multiples of the resonant frequency that are not multiples of one another, both cross-talk within the angular rate sensor and the effect of harmonics of the resonant frequency may be reduced. In some examples, the lower of the two integers is at least four, at least six or at least eight, thereby ensuring sufficient separation from the vibrating structure resonant frequency.

In some examples, the first frequency may be a first prime number multiple of the resonant frequency of the vibrating structure and the second frequency may be a second prime number multiple of the resonant frequency of the vibrating structure, where the first and second prime numbers are different. In some examples, the first frequency and the second frequency may be integer multiples of the resonant frequency of the vibrating structure, wherein the integers are co-prime. Setting the frequency of the voltage applied to the first and second pick-off transducers as integer multiples of the resonant frequency of the vibrating structure that do not share any common factors other than one may allow cross-talk and interference within the angular rate sensor (e.g. in the first and second pick-off circuitry) to be reduced.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

Certain preferred embodiments of this disclosure will now be described, by way of example only, with reference to the accompanying drawings, in which:
FIG. 1 shows a MEMS structure for an angular rate sensor according to an example of the present disclosure;
FIG. 2 schematically illustrates the primary pick-off transducers of an angular rate sensor according to an example of the present disclosure;
FIG. 3 schematically illustrates the operation of a drive transducer and a pick-off transducer of an angular rate sensor according to an example of the present disclosure;
FIG. 4 shows pick-off circuitry for a vibrating structure gyroscope according to a first example of the present disclosure;
FIG. 5 shows an illustrative pick-off signal for an angular rate sensor according to an example of the present disclosure;
FIG. 6 shows pick-off circuitry for a vibrating structure gyroscope according to a second example of the present disclosure;
FIG. 7 shows pick-off circuitry for a vibrating structure gyroscope according to a third example of the present disclosure; and
FIG. 8 shows pick-off circuitry for a vibrating structure gyroscope according to a fourth example of the present disclosure.

### DETAILED DESCRIPTION

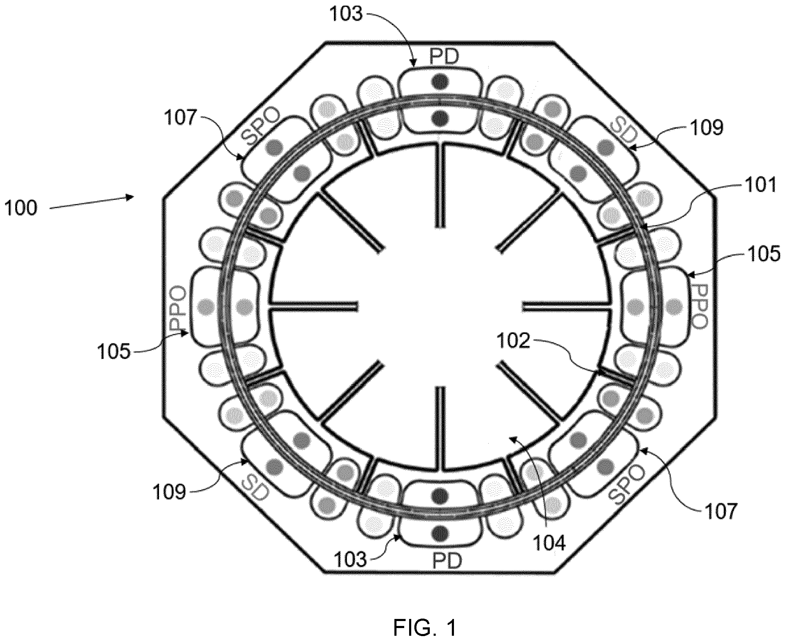

Figure 1 shows a schematic plan view of a MEMS structure 100 for an angular rate sensor. The MEMS structure 100 comprises an annular resonator in the form of a planar ring structure 101 supported by eight pairs of equiangularly spaced compliant supporting structures 102, which extend from the planar ring structure 101 to a rigid mount 104. The planar ring structure 101, supporting structures 102 and rigid mount 104 are formed from silicon. The supporting structures 102 are flexible or compliant compared to the rigid mount 104 and the planar ring structure 101, allowing the planar ring structure 101 to move elastically relative to the rigid mount 104, for example when deformed by an applied force.

Pairs of drive transducers 103, 109 and pairs of pick-off transducers 105, 107 are located around the planar ring structure 101, and are used to control oscillation of the angular rate sensor in response to drive signals from drive circuitry (not shown in Figure 1 for simplicity).

The angular rate sensor shown in Figure 1 operates according to a "closed loop" control scheme. A pair of primary drive transducers 103 are used to excite the planar ring structure 101 to oscillate in a primary mode at a resonant frequency of the planar ring structure 101. Oscillation in the primary mode is detected using primary pick-off transducers 105, and the magnitude of the detected primary oscillation is provided to an automatic gain control system which controls the drive voltage applied to the primary drive transducers 103 such that a constant amplitude of oscillation in the primary mode is maintained.

When the angular rate sensor is subjected to an applied rotation around an axis substantially perpendicular to the ring structure, Coriolis forces couple energy into a secondary mode of vibration, with the amplitude of the vibration being proportional to the applied angular rate. Vibration in this secondary mode is detected using the secondary pick-off transducers 107, and the induced motion is nulled by applying a force using secondary drive transducers 109 based on the detected amplitude of oscillation in the secondary mode. In this "force-feedback" mode of operation, the applied nulling force is directly proportional to the applied angular rate, allowing the rate of angular motion experienced by the angular rate sensor to be determined.

The primary and secondary drive transducers 103, 109 are provided as diametrically opposed pairs of transducers, such that they do not apply any net linear force which could induce a rigid body motion of the planar ring structure 101. The primary and secondary pick-off transducers 105, 107 are also provided as diametrically opposed pairs to prevent perturbing signals, resulting from in-plane motion, e.g. caused by applied shock or vibration of the angular rate sensor, from being detected. Perturbing signals such as those caused by shock will be out-of-phase as determined by the opposed pairs of sensing transducers, and therefore cancel when the signals are summed together.

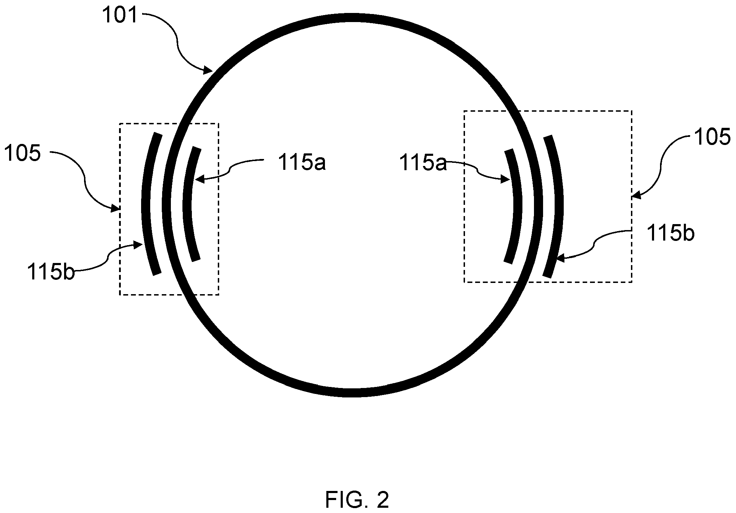

Each of the transducers 103, 105, 107 and 109 shown in Figure 1 comprises a pair of electrodes: a first electrode located radially inside the planar ring structure 101, and a second electrode located radially outside the planar ring structure 101. This arrangement is illustrated schematically in Figure 2, which shows the electrodes 115a, 115b of the diametrically opposed pair of primary pick-off transducers 105 of the MEMS structure 100 shown in Figure 1.

As shown in Figure 2, each primary pick-off transducer 105 comprises a first, inner electrode 115a located radially inside the planar ring structure 101, and a second, outer electrode 115b located radially outside the planar ring structure 101. The primary drive transducers 103, secondary pick-off transducers 107 and secondary drive transducers 109 shown in Figure 1 have an equivalent structure, i.e. each comprising an inner electrode located radially inside the planar ring structure 101 and an outer electrode located radially outside the planar ring structure 101.

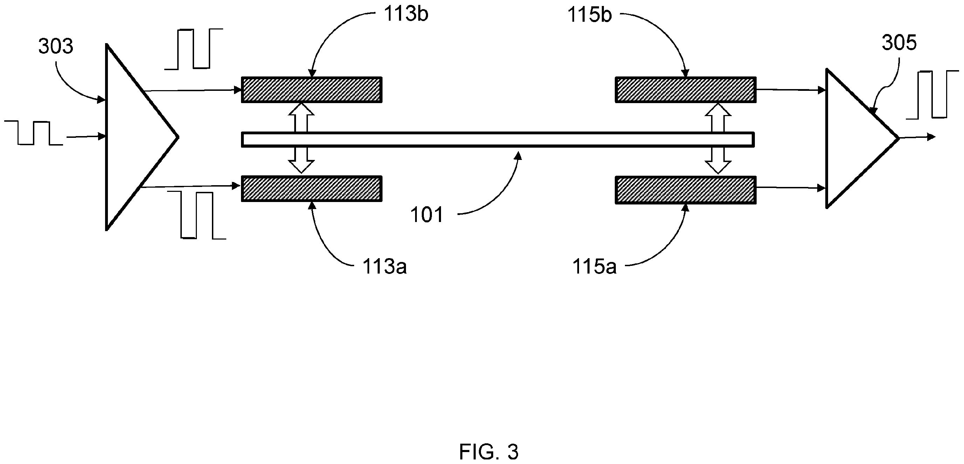

Figure 3 schematically illustrates the function of a primary drive transducer 103 and a primary pick-off transducer 105 of the angular rate sensor shown in Figure 1 according to a conventional mode of operation. In use, a single-input to differential output amplifier 303 applies equal and opposite drive voltages to a first primary drive electrode 113a and a second primary drive electrode 113b of the primary drive transducer 103. The drive voltage in this example is a periodic square wave with a frequency fₙ set based on the fundamental resonant frequency of the planar ring structure 101.

The application of a periodic drive voltage, which could be a sine wave voltage, but in this example is a square wave drive voltage, to the electrodes 113a, 113b causes the planar ring structure 101 to oscillate at its resonant frequency fₙ.. When oscillating in this way, the planar ring structure 101 moves repeatedly from a position in which it is closer to the inner drive electrode 113a and outer pick off electrode 115b and a position in which it is closer to the outer drive electrode 113b and the inner pick off electrode 115a. A fixed voltage, V_{ring} is also applied to the planar ring structure 101 such that the motion of the planar ring structure 101 varies linearly with the drive voltage.

In conventional arrangements, in which a large fixed voltage V_{ring} is applied to the planar ring structure 101, this periodic motion can be used to cause a charge pumping effect in the primary pick-off electrodes 115a, 115b. When the planar ring structure 101 is moved closer to the inner primary pick-off electrode 115a, the capacitance between the ring and the inner primary pick-off electrode 115a increases, while the capacitance between the ring and the outer primary pick-off electrode 115b decreases. Similarly, when the planar ring structure 101 moves closer to the outer primary pick-off electrode 115b, the capacitance between the ring and the outer primary pick-off electrode 115b increases, while the capacitance between the ring and the inner primary pick-off electrode 115a decreases. This change in capacitance at the two electrodes causes a current to flow that is proportional to the voltage on the ring and the rate of change of capacitance. A differential amplifier 305 amplifies these currents to produce a signal that can then be measured and analysed to determine the amplitude of oscillation of the planar ring structure 101.

Although the application of a large voltage to the planar ring structure 101 enables charge pumping for the detection of oscillation of the planar ring structure 101, it also results in an electric field gradient between the inner primary pick-off electrodes 115a and the planar ring structure 101 and between the outer primary pick-off electrodes 115b and the planar ring structure 101. This electric field gradient is known to result in the migration of charged species towards the surfaces of the electrodes 115a, 115b closest to the planar ring structure 101.

This effect, known as 'charge trapping', can result in unacceptable bias and scale factor errors in the pick-off signal, with the severity of the effect dependent on the strength of the electric field gradient, and hence the voltage applied to the planar ring structure 101. However, the magnitude of the current generated during charge pumping, and hence the measured signal, is dependent on the voltage applied to the planar ring structure 101. It is therefore not possible, in conventional arrangements, to simply reduce the voltage applied to the planar ring structure 101 without negatively impacting the signal to noise ratio that can be achieved using the vibrating structure gyroscope.

However, the present inventor has recognised that the voltage applied to the planar ring structure 101 can be reduced in accordance with the present disclosure through appropriate modification of the pick-off circuitry for the vibrating structure gyroscope, as explained below.

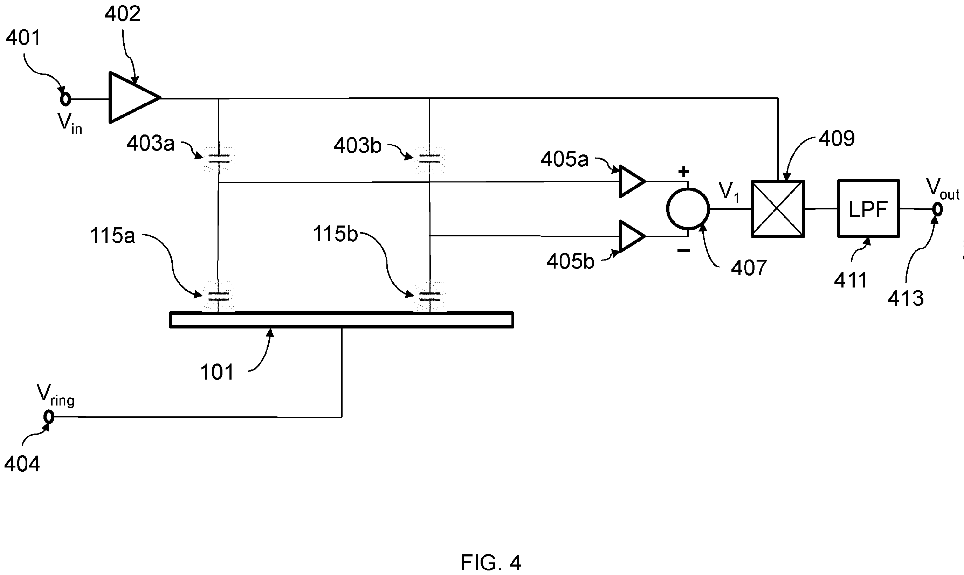

Figure 4 schematically illustrates pick-off circuitry for a vibrating structure gyroscope according to a first example of the present disclosure. More specifically, Figure 4 shows the planar ring structure 101 and the primary pick-off electrodes 115a, 115b of Figure 1, connected to pick-off circuitry in accordance with the present disclosure as will be explained below.

Although the primary pick-off electrodes 115a, 115b are shown as capacitors in Figure 4, it will be appreciated that in practice each electrode 115a, 115b forms one plate of a capacitor, with the second plate formed by the planar ring structure 101 itself, such that a capacitor gap is formed between each of the electrodes 115a, 115b and the planar ring structure 101.

In the example shown in Figure 4, the pick-off circuitry comprises an input node 401 at which an AC voltage Vᵢₙ is received, the voltage having a frequency greater than the resonant frequency of the planar ring structure 101. The voltage Vᵢₙ is amplified by an amplifier 402 and applied to the first electrode 115a, the second electrode 115b and a mixer 409.

In contrast to conventional arrangements, the pick-off circuitry shown in Figure 4 does not use charge pumping to detect motion of the planar ring structure 101, and hence it is not necessary for a DC bias voltage to be applied to the ring structure 101 for a pick-off signal to be measured. However, a DC bias voltage V_{ring} is nonetheless applied to the planar ring structure 101 from an input node 404 to allow the planar ring structure 101 to be driven to oscillate by drive electrodes (not shown in Figure 4). As V_{ring} is not required for pick-off, its magnitude may be significantly reduced when compared to conventional arrangements. This in turn can greatly reduce charge trapping and its effects.

A first capacitor 403a is connected between the amplifier 402 and the first electrode 115a so as to form a first voltage divider that provides an output to a summing junction 407 via an amplifier 405a. A second capacitor 403b is connected between the amplifier 402 and the second electrode 115b so as to form a second voltage divider that provides an output to the summing junction 407 via an amplifier 405b. The first and second capacitors 403a, 403b have substantially the same capacitance such that the outputs to the summing junction 407 are equally weighted.

The summing junction 407 is arranged to determine the difference between the magnitude of the voltage output by the first voltage divider and the magnitude of the voltage output by the second voltage divider. In this way, the summing junction 407 outputs a summed voltage V₁ to the mixer 409 comprising a component resulting from motion of the planar ring structure 101 relative to the electrodes 115a, 115b as explained below.

The first electrode 115a and the second electrode 115b are located at respective sides of the planar ring structure 101 as shown in Figure 2, and the same AC signal is applied at each of the electrodes 115a, 115b from the input node 401 (via the first and second voltage dividers).

As such, movement of the planar ring structure 101 towards one of the electrodes 115a, 115b causes a change in the respective capacitor gap between each of the electrodes 115a, 115b and the planar ring structure 101. The resulting change in capacitance changes the voltage division on the first and second voltage dividers, and thus varies the voltage output from each of the first and second voltage dividers to the summing junction 407 (the inputs to the summing junction 407 being taken from intermediate nodes on the first and second voltage dividers).

The change in the voltages received at the summing junction 407 can be detected and analysed to determine the motion of the planar ring structure 101. For example, movement of the planar ring structure 101 towards one of the electrodes 115a, 115b results in an increase in the magnitude of the voltage output to the summing junction 407 from the voltage divider associated with said one of the electrodes 115a, 115b and a decrease in the magnitude of the voltage output to the summing junction 407 from the voltage divider associated with the other of the electrodes 115a, 115b. The summing junction 407 is thus arranged to determine the difference between the magnitudes of the voltages output by the two voltage dividers as a difference voltage.

The output of the summing junction 407 is a voltage V₁ that is a high frequency, suppressed carrier, amplitude modulated signal which may be demodulated to create the desired pick-off signal representative of motion of the planar ring structure 101. More specifically, the output of the summing junction 407 is a signal at a carrier frequency set by the frequency of Vᵢₙ that is amplitude modulated due to changes in the voltage on the electrodes 115a, 115b caused by the variation in capacitance resulting from motion of the planar ring structure 101.

In the example shown in Figure 4, the summed voltage V₁ is provided to a mixer 409, where it is downmixed with the voltage Vᵢₙ to remove the high frequency carrier. The output of the mixer 409 is provided to a low pass filter 411, resulting in a voltage output 413 that represents the motion of the planar ring structure 101 at the resonant frequency fₙ.

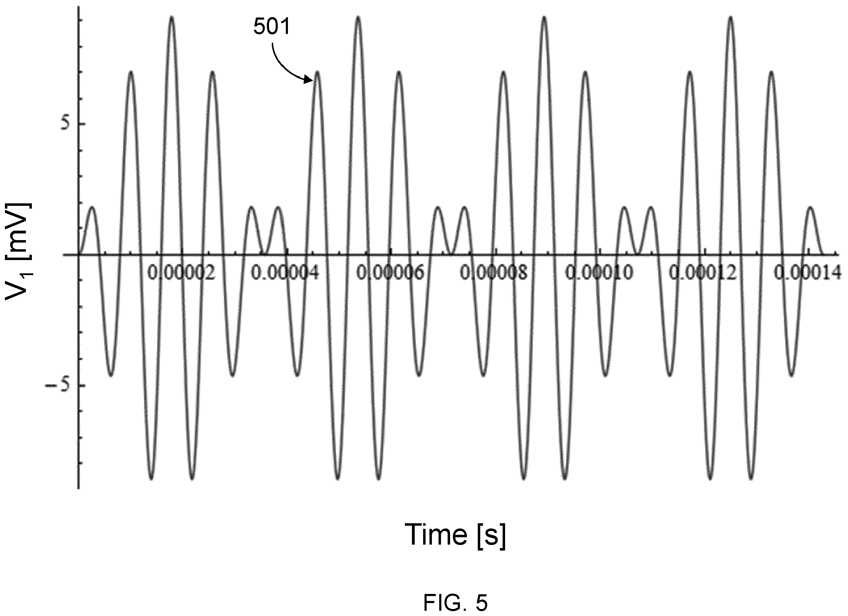

An example of the output V₁ of the summing junction 407 over time is illustrated in Figure 5 as curve 501. In the example shown in Figure 5, the resonant frequency of the planar ring structure 101 is 14 kHz, and the frequency of the voltage Vᵢₙ is 126 kHz, i.e. 9 times the resonant frequency. It can be seen that the output V₁ comprises a carrier wave at 126 kHz that is amplitude modulated at 14 kHz due to the oscillation of the planar ring structure 101 at the resonant frequency. After mixing with the input voltage Vᵢₙ to remove the carrier wave and low-pass filtering, the detected voltage can be used to detect motion of the planar ring structure 101 at its resonant frequency.

In the example shown in Figure 4, the motion detected by the primary pick-off electrodes 115a, 115b relates to oscillation of the planar ring structure 101 in a primary mode and may be used, e.g. in an automatic gain control circuit, to generate a drive signal for the primary drive transducers 103. It will be appreciated however that the pick-off circuitry shown in Figure 4 is equally applicable to secondary pick-off transducers, which may be used to detect motion of the planar ring structure in a secondary mode induced by Coriolis forces when an angular rate is applied around an axis substantially perpendicular to the planar vibrating ring structure. In this way, the pick-off circuit shown in Figure 4 may be used to detect an applied angular rate.

Although Figures 1 to 5 describe the use of a MEMS structure comprising a planar vibrating ring structure, it will be appreciated that the present disclosure is equally applicable to any MEMS structure suitable for use in a vibrating structure gyroscope arranged to determine a rate of rotation based on the Coriolis effect. For example, the present disclosure may be applied to vibrating structure angular rate sensors comprising a tuning fork rather than a planar ring resonator.

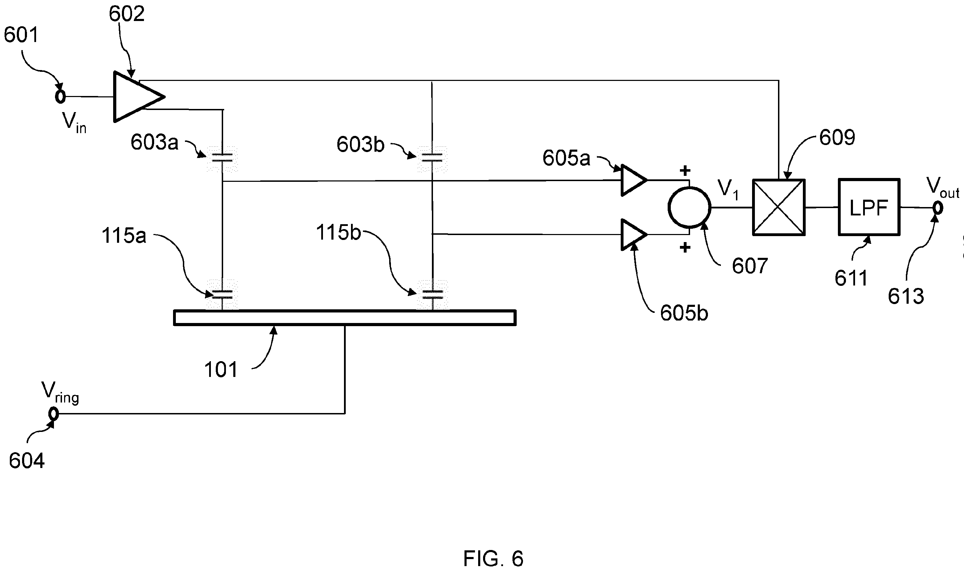

Figure 6 schematically illustrates pick-off circuitry for a vibrating structure gyroscope according to a second example of the present disclosure.

As described above in relation to Figure 4, the pick-off circuitry shown in Figure 6 does not use charge pumping to detect motion of the planar ring structure 101, allowing V_{ring} to be significantly reduced in comparison to conventional arrangements. However, a DC bias voltage, V_{ring} is nonetheless applied to the planar ring structure 101 from an input node 604 to allow the planar ring structure 101 to be driven to oscillate by drive electrodes (not shown in Figure 6). By way of example, the magnitude of V_{ring} in this example may be as low as 10 V or even as low as 5 V rather than a conventional 28 V.

The pick-off circuitry shown in Figure 6 comprises an input node 601 at which an AC voltage Vᵢₙ is received, the voltage having a frequency greater than the resonant frequency of the planar ring structure 101. The voltage Vᵢₙ is provided to a single-input to differential output amplifier 602, which provides amplified voltages of opposite polarity to the first electrode 115a and the second electrode 115b. The voltage applied to the second electrode 115b is also provided to a mixer 609.

A first capacitor 603a is connected between the amplifier 602 and the first electrode 115a so as to form a first voltage divider that provides an output (from its intermediate node) to a summing junction 607 via an amplifier 605a. A second capacitor 603b is connected between the amplifier 602 and the second electrode 115b so as to form a second voltage divider that provides an output (from its intermediate node) to the summing junction 607 via an amplifier 605b. The first and second capacitors 603a, 603b have substantially the same capacitance such that the outputs to the summing junction 607 are equally weighted.

The summing junction 607 is arranged to determine the difference between the magnitude of the voltage output by the first voltage divider and the magnitude of the voltage output by the second voltage divider and to output a summed voltage V₁ to the mixer 609 comprising a component resulting from motion of the planar ring structure 101 relative to the electrodes 115a, 115b.

In the example shown in Figure 6, the first electrode 115a and the second electrode 115b are located at respective sides of the planar ring structure (as shown in Figure 2), and AC voltages of opposing polarity are applied at the electrodes 115a, 115b. As with the example of Figure 4, movement of the planar ring structure 101 towards one of the electrodes 115a, 115b results in an increase in the magnitude of the voltage output to the summing junction 607 from the corresponding voltage divider and movement away from the other of the electrodes 115a, 115b results in a decrease in the magnitude of the voltage output to the summing junction 607 from the corresponding other voltage divider. However, as the waveforms applied to the two voltage dividers in the example of Figure 6 are of opposite polarities, the summing junction 607 is arranged to add its two inputs in order to determine the difference between the magnitudes of the two inputs.

The output of the summing junction 607 is a voltage V₁ that comprises a signal at a carrier frequency set by the frequency of Vᵢₙ that is amplitude modulated due to changes in the voltage on the electrodes 115a, 115b caused by the motion of the planar ring structure 101 (e.g. oscillation at the resonant frequency).

In the example shown in Figure 6, the summed voltage V₁ is provided to a mixer 609, where it is downmixed with the voltage Vᵢₙ to remove the high frequency carrier. The output of the mixer 609 is provided to a low pass filter 611, resulting in a voltage output 613 that represents the motion of the planar ring structure 101 at the resonant frequency fₙ.

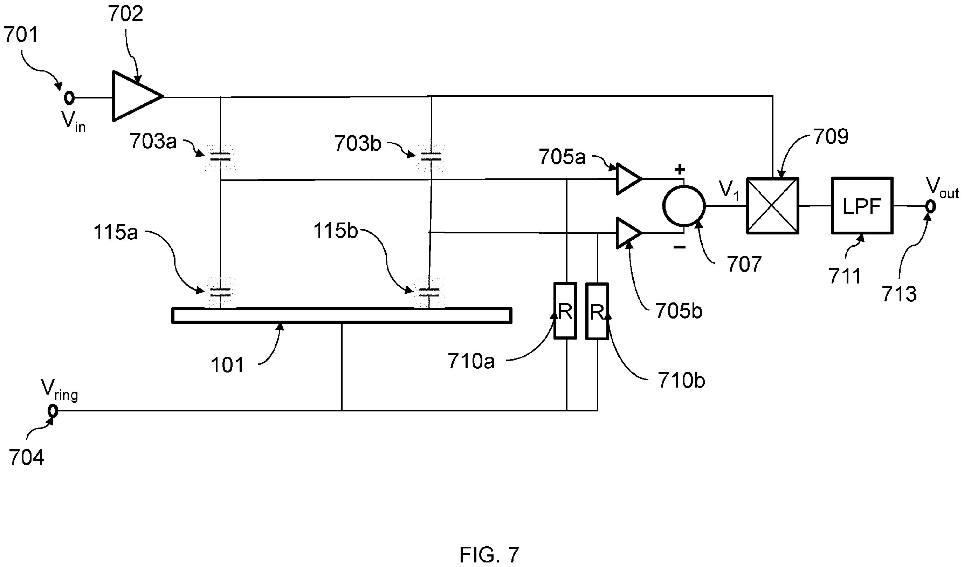

Figure 7 schematically illustrates pick-off circuitry for a vibrating structure gyroscope according to a third example of the present disclosure.

As described above in relation to Figures 4 and 6, the pick-off circuitry shown in in Figure 7 does not use charge pumping to detect motion of the planar ring structure 101, allowing V_{ring} to be significantly reduced in comparison to conventional arrangements. However, A DC bias voltage V_{ring} is nonetheless applied to the planar ring structure 101 from an input node 704 to allow the planar ring structure 101 to be driven to oscillate by drive electrodes (not shown in Figure 7). By way of example, the magnitude of V_{ring} in this example may be as low as 10 V or even as low as 5 V rather than a conventional 28 V.

The pick-off circuitry shown in Figure 7 comprises an input node 701 at which an AC voltage Vᵢₙ is received, the voltage having a frequency greater than the resonant frequency of the planar ring structure 101. The voltage Vᵢₙ is amplified by an amplifier 702 and provided to the first electrode 115a, the second electrode 115b and a mixer 709.

A first capacitor 703a is connected between the amplifier 702 and the first electrode 115a so as to form a first voltage divider that provides an output to a summing junction 707 via an amplifier 705a. A second capacitor 703b is connected between the amplifier 702 and the second electrode 115b so as to form a second voltage divider that provides an output to the summing junction 707 via an amplifier 705b. The first and second capacitors 703a, 703b have substantially the same capacitance such that the outputs to the summing junction are equally weighted.

The summing junction 707 is arranged to determine the difference between the magnitude of the voltage output by the first voltage divider and the magnitude of the voltage output by the second voltage divider and to output a summed voltage V₁ to the mixer 709 comprising a component resulting from motion of the planar ring structure 101 relative to the electrodes 115a, 115b.

In the example shown in Figure 7, the first electrode 115a and the second electrode 115b are located at respective sides of the planar ring structure 101 (as shown in Figure 2), and the same AC voltage is applied at each of the electrodes 115a, 115b. As such, movement of the planar ring structure 101 towards one of the electrodes 115a, 115b results in an increase in the magnitude of the voltage output to the summing junction 707 from the voltage divider associated with said one of the electrodes 115a, 115b and a decrease in the magnitude of the voltage output to the summing junction 707 from the voltage divider associated with the other of the electrodes 115a, 115b. The summing junction 707 is thus arranged to determine the difference between magnitudes of the voltages output by the two voltage dividers as a difference voltage.

The output of the summing junction 707 is a voltage V₁ comprising a signal at a carrier frequency set by the frequency of Vᵢₙ that is amplitude modulated due to changes in the voltage on the electrodes 115a, 115b caused by the motion of the planar ring structure 101. In the example shown in Figure 7, the summed voltage V₁ is provided to a mixer 709, where it is downmixed with the voltage Vᵢₙ to remove the high frequency carrier. The output of the mixer 709 is provided to a low pass filter 711, resulting in a voltage output 713 that represents the motion of the planar ring structure 101 at the resonant frequency fₙ.

It will be appreciated that the circuit of Figure 7 thus operates in a similar manner to the circuit of Figure 4.

In contrast to the examples shown in Figures 4 and 6, the first electrode 115a and the second electrode 115b are each connected to the DC bias voltage V_{ring} from the input node 704 via respective first and second resistors 710a, 710b. This connection allows the electrodes 115a, 115b to have the same mean voltage as the planar ring structure 101. With no DC voltage across the capacitors formed by the ring 101 and the first and second electrodes 115a, 115b, there is no gradual migration of charge species and no charge trapping.

The first and second resistors 710a, 710b have a large resistance relative to other components of the first pick-off circuitry (e.g. a resistance of 1 MΩ or greater). These resistances 710a, 710b are large enough that they draw substantially no current from the voltage dividers, i.e. at short timescales (one cycle of the high frequency input voltage), substantially no charge will flow through the large resistors 710a, 710b and thus they will have substantially no effect on the circuit operation as defined above. However, on the longer timescales at which charge migration causes charge trapping effects, the resistors 710a, 710b are able to bleed that small charge off and maintain a zero DC voltage between the ring 101 and the electrodes 115a, 115b. In other words, by connecting the first electrode 115a and the second electrode 115b to the DC bias voltage V_{ring} via respective first and second resistors 710a, 710b, the capacitors 403a, 403b and the electrodes 115a, 115b are able to slowly (relative to the frequency of Vᵢₙ) discharge any accumulated charge through the resistors 710a, 710b over time, while the electrodes 115a, 115b are held at the same mean voltage as the planar ring structure 101. This prevents a voltage difference between the electrodes 115a, 115b and the planar ring structure 101 from forming over time by ensuring that the voltage difference between the two components is held at zero.

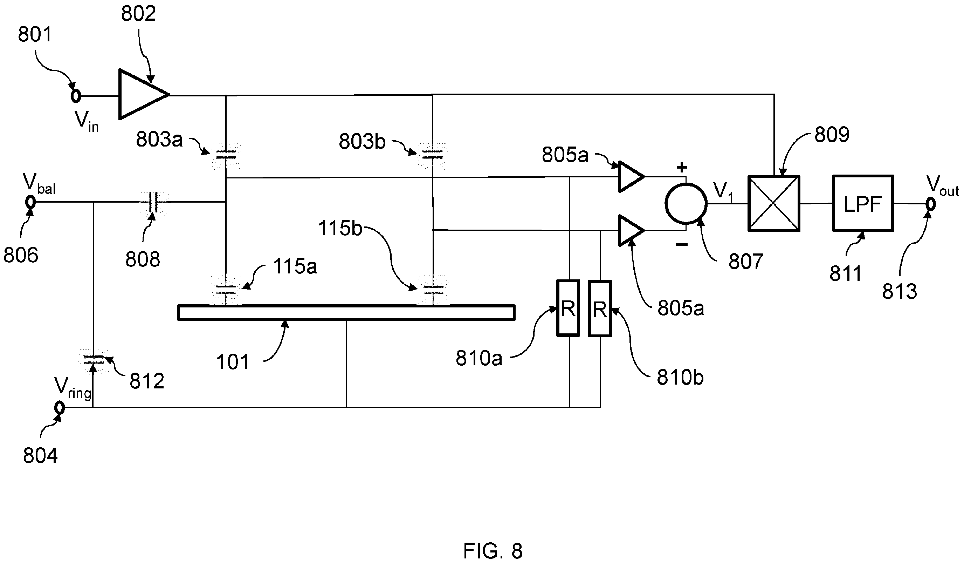

Figure 8 schematically illustrates pick-off circuitry for a vibrating structure gyroscope according to a fourth example of the present disclosure.

As described above in relation to Figures 4, 6 and 7, the pick-off circuitry shown in Figure 8 does not use charge pumping to detect motion of the planar ring structure 101, allowing V_{ring} to be significantly reduced in comparison to conventional arrangements. However, a DC bias voltage, V_{ring}, is nonetheless applied to the planar ring structure 101 from an input node 804, to allow the planar ring structure 101 to be driven to oscillate by drive electrodes (not shown in Figure 8). By way of example, the magnitude of V_{ring} in this example may be as low as 10 V or even as low as 5 V rather than a conventional 28 V.

The pick-off circuitry shown in Figure 8 comprises an input node 801 at which an AC voltage Vᵢₙ is received, the voltage having a frequency greater than the resonant frequency of the planar ring structure 101. The voltage Vᵢₙ is amplified by an amplifier 802 and provided to the first electrode 115a, the second electrode 115b and a mixer 809.

A first capacitor 803a is connected between the amplifier 802 and the first electrode 115a so as to form a first voltage divider that provides an output to a summing junction 807 via an amplifier 805a. A second capacitor 803b is connected between the amplifier 802 and the second electrode 115b so as to form a second voltage divider that provides an output to the summing junction 807 via an amplifier 805b. The first electrode 115a and the second electrode 115b are also each connected to the DC bias voltage V_{ring} from the input node 804 via respective first and second resistors 810a, 810b to prevent a voltage difference between the electrodes 115a, 115b and the planar ring structure 101 from forming over time as explained above in relation to Figure 7.

Unlike the examples shown in Figures 4, 6 and 7, in the example shown in Figure 8 the capacitance of the first and second capacitors 803a, 803b is not substantially the same. This may be the case where the first and second capacitors 803a, 803b are `off the shelf' components with a large degree of tolerance, rather than being specifically manufactured for use in the pick-off circuit. To compensate for the mismatch in capacitance, the pick-off circuit shown in Figure 8 includes an input 806 for a balancing voltage V_{bal} that is connected to the first electrode 115a. The balancing voltage input 806 is connected to the first electrode via a capacitor 808, and can be adjusted using a variable capacitor 812 connected on a circuit path between the ring voltage input 804 and the balancing voltage input 806 to sufficiently compensate for differences in the capacitance between the first capacitor 803a and the second capacitor 803b. Once the variable capacitor 812 and the balancing voltage V_{bal} are appropriately set, the capacitors 803a and 803b can be treated as effectively equal and the circuit can be operated as described above for figures 4, 6, and 7.

The summing junction 807 is arranged to determine the difference in magnitude of the voltages output by the first voltage divider and the second voltage divider and to output a summed voltage V₁ to the mixer 809 resulting from motion of the planar ring structure 101 relative to the electrodes 115a, 115b.

In the example shown in Figure 8, the first electrode 115a and the second electrode 115b are located at respective sides of the planar ring structure 101 (as shown in Figure 2), and the same AC voltage is applied at each of the electrodes 115a and 115b. As such, movement of the planar ring structure 101 towards one of the electrodes 115a, 115b results in an increase in the magnitude of the voltage output to the summing junction 807 from the voltage divider associated with said one of the electrodes 115a, 115b and a decrease in the magnitude of the voltage output to the summing junction 807 from the voltage divider associated with the other of the electrodes 115a, 115b. The summing junction 807 is thus arranged to determine the difference between the magnitudes of the voltages output by the two voltage dividers as a difference voltage.

The output of the summing junction 807 is a voltage V₁ comprising a signal at a carrier frequency set by the frequency of Vᵢₙ that is amplitude modulated due to changes in the voltage on the electrodes 115a, 115b caused by the motion of the planar ring structure 101. In the example shown in Figure 8, the summed voltage V₁ is provided to a mixer 809, where it is downmixed with the voltage Vᵢₙ to remove the high frequency carrier. The output of the mixer 809 is provided to a low pass filter 811, resulting in a voltage output 813 that represents the motion of the planar ring structure 101 at the resonant frequency fₙ.

It will be appreciated by those skilled in the art that the present disclosure has been illustrated by describing one or more specific examples thereof, but is not limited to these examples; many variations and modifications are possible, within the scope of the accompanying claims.

## Claims

1. A vibrating structure angular rate sensor comprising:
a MEMS structure comprising a vibrating structure;
a primary drive transducer arranged to cause the structure to oscillate in a primary mode at a resonant frequency;
a first pick-off transducer arranged to sense oscillation of the structure, the first pick-off transducer comprising a first electrode and a second electrode; and
first pick-off circuitry;
wherein the first pick-off circuitry is arranged to apply a voltage having a frequency above the resonant frequency of the structure to the first electrode and the second electrode; and
wherein the first pick-off circuitry is further arranged to detect changes in the voltage on the first electrode and the second electrode resulting from motion of the structure with respect to the first electrode and the second electrode.

2. The vibrating structure angular rate sensor of claim 1, wherein the first pick-off circuitry comprises an input node for receiving the applied voltage, and wherein the first pick-off circuitry comprises a first capacitor connected between the input node and the first electrode, and a second capacitor connected between the input node and the second electrode.

3. The vibrating structure angular rate sensor of claim 2, wherein the capacitance of the first capacitor and the capacitance of the second capacitor are substantially identical.

4. The vibrating structure angular rate sensor of claim 2 or 3, wherein a balancing voltage is applied to one of the first electrode and the second electrode.

5. The vibrating structure angular rate sensor of any of claims 2 to 4, wherein the first pick-off circuitry comprises a summing junction arranged to output a signal based on the voltage on the first electrode and the voltage on the second electrode.

6. The vibrating structure angular rate sensor of claim 5, wherein the summing junction comprises a differential amplifier arranged to receive inputs based on the voltage on the first electrode and the voltage on the second electrode at respective input terminals, and to output a difference voltage.

7. The vibrating structure angular rate sensor of claim 5, wherein the voltage applied to the first electrode is inverted with respect to the voltage applied to the second electrode, and wherein the summing junction comprises a summing amplifier arranged to receive inputs based on the voltage on the first electrode and the voltage on the second electrode at respective input terminals, and to output a sum voltage.

8. The vibrating structure angular rate sensor of any of claims 5 to 7, wherein the pick-off circuitry comprises means for performing synchronous demodulation of the signal output by the summing junction.

9. The vibrating structure angular rate sensor of claim 7, wherein the means for performing synchronous demodulation comprises a mixer and a low pass filter.

10. The vibrating structure angular rate sensor of any preceding claim, wherein the frequency of the applied voltage is an integer multiple of the resonant frequency of the structure.

11. The vibrating structure angular rate sensor of any preceding claim, wherein the structure is connected to a DC bias voltage.

12. The vibrating structure angular rate sensor of claim 11, wherein the first electrode and the second electrode are electrically connected to the DC bias voltage via respective first and second resistors.

13. The vibrating structure angular rate sensor of any preceding claim, further comprising:
a second pick-off transducer comprising a third electrode and a fourth electrode; and
second transducer pick-off circuitry;
wherein the second transducer pick-off circuitry is arranged to apply a voltage having a frequency above the resonant frequency of the structure to the third electrode and the fourth electrode;
and wherein the second transducer pick-off circuitry is further arranged to detect changes in the voltage on the third electrode and the fourth electrode resulting from motion of the structure with respect to the third electrode and the fourth electrode.

14. The vibrating structure angular rate sensor of claim 13, wherein the first pick-off transducer is a primary pick-off transducer arranged to sense oscillation of the structure in the primary mode; and
wherein the second pick-off transducer is a secondary pick-off transducer arranged to sense oscillation of the structure in a secondary mode induced by Coriolis forces when an angular rate is applied around an axis substantially perpendicular to the structure.

15. The vibrating structure angular rate sensor of claim 14, wherein the frequency of the voltage applied to the first and second electrodes is a first integer multiple of the resonant frequency of the vibrating structure; and wherein the frequency of the voltage applied to the third and fourth electrodes is a second integer multiple of the resonant frequency of the vibrating structure, wherein the first and second integers are different.
